Europäisches Patentamt

European Patent Office

Office européen des brevets

(11) Publication number: **0 143 270**
**B1**

## (12) EUROPEAN PATENT SPECIFICATION

(45) Date of publication of patent specification: **21.10.87**

(51) Int. Cl.⁴: **B 60 T 13/52**

(21) Application number: **84111672.6**

(22) Date of filing: **29.09.84**

(54) A brake assembly.

(30) Priority: **23.11.83 US 554514**

(43) Date of publication of application:
**05.06.85 Bulletin 85/23**

(45) Publication of the grant of the patent:
**21.10.87 Bulletin 87/43**

(84) Designated Contracting States:
**DE FR GB IT**

(56) References cited:
**EP-A-0 067 775**
**DE-A-2 038 385**
**GB-A-2 084 274**
**US-A-3 724 211**
**US-E- 31 080**

(73) Proprietor: **ALLIED CORPORATION**
**Columbia Road and Park Avenue P.O. Box 2245R**
**(Law Dept.)**
**Morristown New Jersey 07960 (US)**

(72) Inventor: **Myers, Lawrence Robert**
**21945 Roosevelt Road**
**South Bend Indiana 46614 (US)**

(74) Representative: **Brullé, Jean et al**
**Service Brevets Bendix 44, rue François 1er**
**F-75008 Paris (FR)**

Courier Press, Leamington Spa, England.

## Description

This invention relates to a brake assembly according to the preamble of claim 1. Preferably, such an assembly has a master cylinder attached to a conical shaped front shell of a power assist apparatus. The position of the operational pistons in the master cylinder is established through an adjustable stop to permit fluid to freely flow from a reservoir to the master cylinder through compensator ports. Initial movement of a movable wall in the power assist apparatus interrupts fluid flow through the compensator ports. Thereafter the output force moves the pistons to pressurize fluid in the master cylinder and effect a brake application. The resistance to movement and any axial deflection produced as a result of the output force are substantially reduced through the conical shaped front shell of the power assist apparatus. Thus substantially the entire movement of the movable wall is immediately transferred into the pressurizing of fluid in the master cylinder without any lost motion.

In typical brake assemblies such as that disclosed in U.S. Patent 3,724,211 corresponding to the preamble of claim 1, the alignment of the pistons within a master cylinder with compensator ports is achieved through an extension on the push rod connection between the movable wall and the pistons. This type of calibration requires the measured output of the power assist apparatus to be matched with the measured travel of the pistons of the master cylinder in order to produce an optimum output for operating a brake system. Unfortunately, when the maximum output of the power assist apparatus is transmitted to the master cylinder, the front shell thereof deflects away from the fixed stationary support causing some linear travel that is sensed as lost motion by the brake pedal.

In the brake assembly according to the invention, this difficulty is avoided by the characterising features of claim 1. In a preferred arrangement, the brake assembly has a push rod that has a first end pivotally fixed to a piston in the master cylinder and a second end attached to the hub of the movable wall of the power assist apparatus. A return spring in the master cylinder acts on the piston to hold the second end of the push rod in contact with the hub. At the same time a return spring in the power assist apparatus urges the movable wall and attached hub toward the rear shell that is attached to a stationary support. The hub has an annular projection that extends through an opening in the rear shell. The annular projection retains a valve for controlling the development of a pressure differential across the movable wall. An adjustable cylindrical member which is located in the opening has a first end that extends into the rear chamber of the power assist apparatus. The return spring of the power assist apparatus urges the hub into engagement with the first end of the cylindrical member. The adjustable member is moved with respect to the flange surrounding the opening until fluid can freely flow between the chambers in the master cylinder and the reservoir through the compensator ports therein. When this position is reached, a locking surface on the cylindrical member engages the flange to fix the position of the first end with respect to the flange. A bearing member attached to the flange engages the annular projection to seal the rear chamber and hold the hub in a substantially fixed axial position within the power assist apparatus.

In response to an input signal, the valve allows air from the environment to enter the rear chamber and create a pressure differential across the movable wall. The pressure differential acts on the movable wall to produce an output force as the movable wall moves toward the front shell. The conical shape of the front shell resists any deflection caused by the resistance to movement of the piston in the master cylinder and thereby substantially permits the entire movement of the movable wall to be utilized in pressurizing fluid.

An advantage created by this invention results in the capability of attaching a master cylinder to a power assist apparatus and thereafter positioning the pistons within the master cylinder in such a manner that compensation of fluid from a reservoir occurs at the rest position of the operational movable wall in the power assist apparatus.

Another advantage of this invention results from the conical shape of the front shell, movable wall and rear shell being nestled together to form a compact structure. The conical shape of the front shell allows the front shell to extend over and partially surround the master cylinder to further contribute to the overall compact structure of the brake assembly.

It is a further object of this invention to provide a brake assembly with a power assist apparatus having a conical shaped front shell that substantially reduces deflection caused by the resistance of the pistons to movement by the output force developed in the power assist apparatus.

These and other objects should be apparent from reading this specification while viewing the drawings.

Figure 1 is a schematic of a brake assembly of the invention disclosed herein with a partial sectional view of a master cylinder and power assist apparatus;

Figure 2 is a partial sectional view of another embodiment of an adjustable stop and combined bearing structure for use with the power assist apparatus illustrated in Figure 1; and

Figure 3 is a partial sectional view of a further embodiment of an adjustable stop and combined bearing assembly for use with the power assist apparatus illustrated in Figure 1.

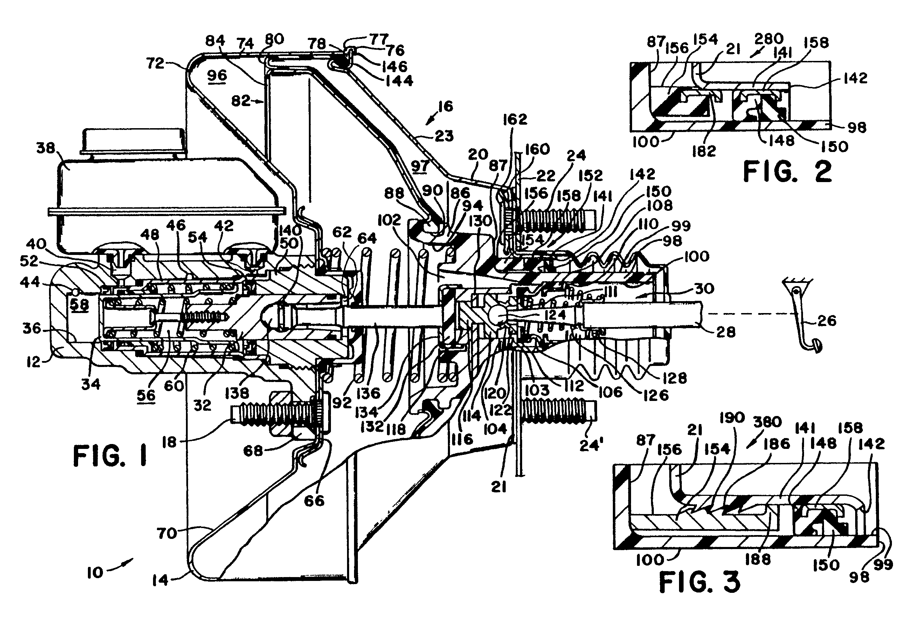

The brake apparatus 10 shown in Figure 1 has a master cylinder 12 which is attached to a front shell 14 of a power assist apparatus 16 by a plurality of bolts 18, only one of which is shown. The front shell 14 is connected to a rear shell 20 having an end plate 21 which is in turn connected to a stationary wall 22 by bolts 24 and 24'. The master cylinder 12 is connected to the wheel brakes of a vehicle while the power assist apparatus 16 is connected to a brake pedal 26 by push rod 28.

The brake pedal 26 moves in response to an input from an operator to activate a valve 30 in the power assist apparatus and provide the master cylinder 12 with a corresponding input force to pressurize fluide therein through the movement of pistons 32 and 34 and effect a brake application.

Master cylinder 12 is of the type fully disclosed in U.S. Re Patent 31,080, wherein a housing has a bore 36 which is connected to a reservoir 38 through compensator ports 40 and 42. Bore 36 is also connected to the wheel brakes through supply ports 44 and 46. Pistons 32 and 34 are located in bore 36 by sleeve mechanism 48 and end cap 50. Seals 54 and 52 and pistons 32 and 34 cooperate with housing 12 to define first and second chambers 56 and 58 which are connected to supply ports 44 and 46 respectively. A return spring 60 located in bore 36 acts on piston 32 to urge face 62 against a stop 64 on end cap 50. In this position, fluid from reservoir 38 freely communicates to chambers 56 and 58 through compensator ports 42 and 40.

The front shell 14 of power assist apparatus 16 has an end plate 66 which is relatively flat and to which flange 68 on housing 12 abuts. A frusto conical section 70 extends from plate 66 to partially surround the master cylinder 12. The conical section 70 terminates in a base 72 to which a barrel section 74 is attached. The barrel section 74 extends back toward the end plate 66. The barrel section 74 has a flange 76 on the end thereof for receiving a bead 78 of a diaphragm 80 of a movable wall 82.

The movable wall 82 includes diaphragm 80, backing plate 84 and hub 86. Bead 88 is located in groove 90 to connect backing plate 84 with hub 86. After return spring 92 is located between end plate 66 and guide surface 94 on hub 86, bead 78 is located in groove 77. The area located between movable wall 82 and the front shell 14 forms a chamber 96 which is connected to a source of vacuum, i.e. the intake manifold of an internal combustion engine.

Hub 86 has an annular projection 98 with a passage or bore 100 that extends therethrough. A first passage 102 connects chamber 96 to bore 100 and a second passage 104 connects bore 100 to external surface of the annular projection 98.

Valve 30 located in bore 100 has a poppet member 106 with a first end 108 fixed to the annular projection 98 by a retrainer 110 and a second end 112 which is free to move axially within bore 100. A plunger 114 located in bore 100 has a first end 116 that engages bearing surface 118 and a second end 120 with a seat 122 thereon. Ball 124 on the end of push rod 28 is connected to the second end 120 of plunger 114. A spring 126 urges the free end 112 of the poppet 106 into engagement with seat 122 on plunger 114 as spring 128 urges push rod 28 toward stop 130.

A reaction disc 132 located adjacent end 116 of plunger 114 is surrounded by cap 134 on push rod 136. Push rod 136 has a spherical end 138 which is connected to piston 32 by resilient ring 140.

The annular projection 98 on hub 86 is aligned with opening 142 in the rear shell 20, which is defined by a flange 141 of end plate 21. Thereafter rear shell 20 is moved toward the front shell 14 until flange 144 engages flange 76. End 146 of flange 76 is crimped around flange 144 to connect shell 14 to shell 20 and form a chamber 97.

The rear shell 20 has a conical surface 23 that extends from end plate 21. Conical surface 23 is substantially identical to surface 70 of the front shell. As shown, the front shell 14, movable wall 82, and rear shell 20 are concentric to each other and form a compact unitary structure. As annular projection 98 moves through opening 142, seal 148 and support 150 of bearing means 152 engage the peripheral surface 98 to axially align the hub 86 within the power assist apparatus 16. A cylindrical member 154 integrally molded with seal 148 has an end 156 that extends into chamber 97. A retainer 158 surrounds seal 148 and support 150 to provide structural rigidity for the bearing means 152. Support 150 is positioned within retainer 158 such that a minimum of eccentricity can occur between the annular projection 98 and opening 142 without causing a condition wherein either scoring or binding occurs during movement of surface 99. Should scoring occur, it has been normal that seal 148 would fail and thereafter allow air to enter chamber 97.

End plate 21 has several openings therein through which bolts 24, 24' extend to attach shell 20 to support or stationary member 22. An annular support ring 160 is located under the heads 162 on bolts 24 and 24' to uniformly transfer reaction force between the rear shell 20 and stationary member 22.

After the front shell 14 is connected to rear shell 20 a force is applied to retainer 158. This force moves end 156 of the cylindrical member into engagement with shoulder 87 on hub 86. Thereafter this force continues to move hub 86 such that push rod 136 moves pistons 32 and 34 until a preset flow condition is achieved between bore 36 and reservoir 38 through compensator ports 40 and 42. This flow condition is usually measured by the resistance created while passing air through supply ports 44 and 46 with the cap 39 off of the reservoir. Once a desired flow condition is reached, the force acting on retainer 158 is removed and if the interference fit between flange 141 extending from end plate 21 and retainer 158 is not sufficient to lock the cylindrical member 154 in a fixed position, a crimp is rolled around the end of the flange 141.

In a vehicle equipped with the brake assembly 10 shown in Figure 1 and with chamber 96 connected to a source of vacuum, return spring 92 acts on hub 86 to hold shoulder 87 against end 156 of the cylindrical member 154 to establish a rest position for movable wall 82. In this condition, face 122 on end 120 of plunger 114 is held against free end 112 of poppet 106 to permit fluid to flow between chambers 96 and 97 by way of passage 102, bore 100 and passage 104. When an operator desires to effect a brake application, an input force is applied to brake pedal 26 causing push rod 28 to move plunger 114 in bore 100. Initial movement of plunger 114 allows spring 126 to move end 112 into engagement with vacuum seat 103 to interrupt vacuum or fluid flow communication through passage 102. Further movement of plunger 114 moves seat 122 away from end 112 to allow air from the surrounding environment to enter chamber 97 by way of bore 100, opening 111 and passage 104. With air in chamber 97 and vacuum in chamber 96 a pressure differential is created across movable wall 82. This pressure differential acts on and produces a force which urges wall 82 toward chamber 96. This force is transferred from hub 86 through reaction disc 132 into push rod 136 such that on initial movement of wall 82, pistons 32 and 34 close compensator ports 40 and 42 to start the pressurization of fluid in chambers 56 and 58. The resistance to movement of pistons 32 and 34 creates a reaction force that is carried back to stationary member 22 by way of housing 12, bolts 18, shells 14 and 20, annular ring 160, and bolts 24 and 24'. Conical section 70 because of its shape through which the force movements are transferred, attenuates axial deflection caused by the action of the force produced across wall 82. Thus, the input force applied to brake pedal 26 is transmitted to valve 30 without any substantial loss in motion.

On termination of the input force from brake pedal 26, return spring 128 acts on push rod 28 to move face 122 on plunger 114 into engagement with end 112 to terminate communication of air through opening 111. Further movement of plunger 114 moves end 112 away from seat 103 to allow vacuum in chamber 96 to evacuate air from chamber 97 by way of passage 104, bore 100 and passage 102 and eliminate the pressure differential across wall 82. Thereafter return spring 92 acts on hub 86 and moves shoulder 87 into engagement with end 156 to stop the return movement of the movable wall 82. Since push rod 136 is fixed to hub 86, pistons 32 and 34 are again positioned such that fluid communication between reservoir 38 and bore 36 is achieved through compensator ports 40 and 42. Thereafter, fluid from reservoir can flow into chamber 56 and 58 to replenish any fluid loss that may have occurred during a brake application.

The bearing and stop arrangement 280 shown in Figure 2 is similar to that bearing and stop member 152 shown in Figure 1 with exception of the cylindrical member 154 which is held in flange 141 by a second retainer 182. For some applications it may be easier to fabricate cylindrical member 154 and seal 148 as separate piece parts. In this type construction, the force required to move the hub 86 and pistons 32 and 34 to set the flow paths for the fluid from reservoir 38 to bore 36 through compensator ports 40 and 42 causes the flange 141 to expand and later contract to establish a sufficient resistive force to hold the cylindrical member 154 in a fixed position. Later, seal 148 and support 150 are inserted and end of flange 141 is crimped to hold retainer 158 in a fixed position.

The bearing arrangement and stop 380 shown in Figure 3 is similar in construction to bearing and stop member 152 shown in Figure 1 with the exception of the cylindrical member 154. The cylindrical member 154 has a series of barbs or ridges 186, whose apexes have a gentle slope outwardly toward end 188 on one side and an abrupt or acute slope on the opposite side. The flange 141 has a series of grooves, ridges, serrations, or barbs 190 molded therein whose apexes are opposite to those on cylindrical member 154. When the adjusting force is applied to end 188, barbs 186 move with respect to barbs 190 as cylindrical member 154 moves hub 87 toward the master cylinder 12. Once the desired flow condition through compensator ports 40 and 42 is achieved, the bars 188 and 190 secure or lock cylindrical member 154 in a fixed position within flange 141.

Under some circumstances it may be desirable to position the cylindrical member 154 by the hydraulic residual fluid force in chambers 56 and 58. In such instances the barbs on the cylindrical member 154 and flange 141 would be reversed. The fluid flow relationship between the reservoir 38 and bore 36 would be established by the residual fluid pressure in chambers 56 and 58 which could move the cylindrical member 154 toward opening 142. Once fluid communication was established through compensator ports 40 and 42, the residual pressure in chambers 56 and 58 would be eliminated.

After the pistons 32 and 34 have been aligned with respect to the compensating ports 40 and 42 in accordance with the invention disclosed herein, the brake assembly substantially reacts immediately to an input force to effect a brake application.

**Claims**

1. A brake assembly having a power assist apparatus (16) connected to a master cylinder (12) for providing a brake system with pressurized fluid in response to an operational input signal, said master cylinder (12) having a housing with bore (36) therein connected to a reservoir (38) through compensator ports (40, 42) and to said brake system through supply ports (44, 46) and piston means (32, 34) located in said bore (36) to establish chambers (56, 58) therein, said power assist apparatus having a front shell (14) connected to said master cylinder (12) and joined to a rear shell (20, 21) to form a cavity, said cavity being divided into a control chamber (96) and a power chamber (97) by a wall arrangement (82), said wall arrangement (82) having a hub (86) provided with an annular projection (98) held in an opening (142) in said rear shell (20) by a bearing means (152), said annular projection (98) retaining a valve (30) which controls the development of a pressure differential across said wall arrangement (82) in response to said operational signal, said pressure differential causing said wall arrangement (82) to move and supply said pistons (32, 34) with an input force, said input force moving said pistons (32, 34) to interrupt fluid communications through said compensator ports (40, 42) and thereby pressurize fluid in said chambers (56, 58) to effect a brake application, a resilient member (148) having a first surface that is secured to said flange (141) and a flexible surface that engages said annular projection (98) to seal said opening (142); and

a retainer (158) secured to said flange (141) for holding said resilient member (148) in a substantially fixed position in said flange (141); and

a support member (150) held by said retainer (158) against said resilient member (148) and having a surface that engages said annular projection (98), said support (150) and flange (141) permitting limited eccentricity between said opening (142) and annular projection (98) to prevent scoring that could occur on movement of the annular projection (98) and thereafter develop a leak path with respect to said resilient member (148), said bearing means (152) being characterized by a cylindrical member (154) located in said opening (142) and having an annular surface (156) that extends into said power chamber (97), the hub (86) of said wall arrangement (82) abutting said annular surface (156) in said rest position, the position of said cylindrical member (154) being adjustable with respect to said opening to align said pistons (32, 34) with respect to said compensator ports (40, 42), said cylindrical member (154) for this purpose having a locking surface that engages a flange (141) on said rear shell (20, 21) that surrounds said opening (142), said locking surface fixing the position of said annular surface (156) to thereby maintain said alignment of said pistons.

2. The brake assembly as recited in Claim 1 wherein said locking surface on said cylindrical member (154) is further characterized by an interference fit with said flange (141) to establish sufficient frictional resistance to assure that the engagement of the hub (86) of said wall arrangement (82) with said annular surface (156) in normal use does not move said cylindrical member (154).

3. The brake assembly as recited in Claim 1 wherein said locking surface on said cylindrical member (154) is further characterized by ridges (186) which mate with corresponding ridges (190) on said flange (141) to fix the position of said cylindrical member (154) with respect to said hub (86) and the position of said pistons (32, 34) with respect to said compensator ports (40, 42).

4. The brake assembly as recited in Claim 1 wherein said bearing means (152) is further characterized by said cylindrical member (154) and said resilient member (148) being a unitary body.

5. The brake assembly as recited in Claim 3 wherein said locking surface is further characterized by a rib (188) on said cylindrical member (154) that limits the movement of said cylindrical member (154) toward said wall arrangement (82).

6. The brake assembly as recited in Claim 1 wherein said cylindrical member is further characterized by a second retainer (182) having a first portion which is fixed to said flange (141) and a second portion that extends into said power chamber (97) to provide said annular surface (156) with rigidity.

7. The brake assembly as recited in Claim 1 wherein said cylindrical member (154) is characterized by being a resilient member to provide a substantially noise free engagement when the hub (86) of said wall arrangement (82) engages said annular surface (156).

8. The brake assembly as recited in Claim 3 wherein said ridges (186) are characterized by having an apex with a gradual slope on the side facing in the direction of said chamber (97) and an abrupt slope on the side facing away from said chamber (97), said gradual slope allowing said cylindrical member (154) to be moved toward said chamber (97) without damage to the peripheral surface while said abrupt slope offers substantial resistance to movement of the cylindrical member (154) out of said chamber (97).

9. The brake assembly as recited in Claim 1 wherein said cylindrical member (154) and resilient member (148) are unitary and integrally molded around said retainer (158).

**Patentansprüche**

1. Bremsanordnung mit einer Servoeinrichtung (16), die mit einem Hauptzylinder (12) verbunden ist, um eine Bremsanlage in Abhängigkeit von einem Eingangs-Operationssignal mit Druckmittel zu versorgen, wobei der Hauptzylinder (12) ein Gehäuse mit einer Bohrung (36) aufweist, die mit einem Speicher (38) durch Ausgleichsöffnungen (40, 42) und mit der Bremsanlage durch Einlaßöffnungen (44, 46) verbunden ist, und eine Kolbenanordnung (32, 34) in der Bohrung (36) angeordnet ist, um darin Kammern (56, 58) zu bilden, wobei die Servoeinrichtung eine vordere Gehäuseschale (14) aufweist, die mit dem Hauptzylinder (12) verbunden und zur Bildung eines Hohlraumes an einer rückwärtigen Gehäuseschale (20, 21) angefügt ist, wobei der Hohlraum durch eine Wandanordnung (82) in eine Steuerkammer (96) und eine Leistungskammer (97) unterteilt ist, wobei die Wandanordnung (82) eine Nabe (86) aufweist, die mit einem ringförmigen Vorsprung (98) versehen ist, der in einer Öffnung (142) in der rückwärtigen Gehäuseschale (20) durch eine Lagereinrichtung (152) gehalten wird, wobei der ringförmige Vorsprung (98) ein Ventil (30) hält, das in Abhängigkeit von dem Operationssignal die Entwicklung einer an der Wandanordnung (82) anliegenden Druckdifferenz steuert, wobei die Druckdifferenz bewirkt, daß die Wandanordnung (82) sich bewegt und die Kolben (32, 34) mit einer Eingangskraft versorgt, wobei die Eingangskraft die Kolben (32, 34) so bewegt, daß Strömungsverbindungen durch die Ausgleichsöffnungen (40, 42) hindurch unterbrochen werden und dadurch Strömungsmittel in den Kammern (56, 58) unter Druck gesetzt wird, um eine Bremsbetätigung zu bewirken, wobei ein elastisches Teil (148) eine am Flansch (141) befestigte erste Fläche und eine flexible Fläche aufweist, die zur Abdichtung der Öffnung (142) am ringförmigen Vorsprung (98) angreift, und einem Halter (158), der an dem Flansch (141) befestigt ist, um das elastische Teil (148) in im wesentlichen fester Lage im Flansch (141) zu halten, und einem Abstützteil (150), das von dem Halter (158) gegen das elastische Teil (148) gehalten wird und eine Fläche besitzt, die an dem ringförmigen Vorsprung (98) angreift, wobei das Abstützteil (150) und der Flansch (141) eine begrenzte Exzentrizität zwischen der Öffnung (142) und dem ringförmigen Vorsprung (98) zuläßt, um ein Kratzen zu verhindern, das bei einer Bewegung des ringförmigen Vorsprunges (98) auftreten und danach einen Leckpfad bezüglich des elastischen Teils (148) entwickeln könnte, wobei die Lagereinrichtung (152) gekennzeichnet ist durch ein zylindrisches Teil (154), das in der Öffnung (142) angeordnet ist und eine ringförmige Fläche (156) besitzt, die sich in die Leistungskammer (97) hineinerstreckt, wobei die Nabe (86) der Wandanordnung (82) an der ringförmigen Fläche (156) in der Ruhestellung anliegt, wobei die Lage des zylindrischen Teils (154) bezüglich der Öffnung verstellbar ist, um die Kolben (32, 34) bezüglich der Ausgleichsöffnungen (40, 42) auszurichten, wobei das zylindrische Teil (154) zu diesem zweck eine Verriegelungsfläche aufweist, die an einem Flansch (141) an der rückwärtigen Gehäuseschale (20, 21) angreift, welcher die Öffnung (142) umgibt, wobei die Verriegelungsfläche die Lage der ringförmigen Fläche (156) festlegt, um die besagte Ausrichtung der Kolben aufrechtzuerhalten.

2. Bremsanordnung nach Anspruch 1, bei der die Verriegelungsfläche auf dem zylindrischen Teil (154) außerdem gekennzeichnet ist durch einen Preßsitz mit dem Flansch (141), um einen ausreichenden Reibwiderstand zu erzeugen, der sicherstellt, daß das Angreifen der Nabe (86) der Wandanordnung (82) an der ringförmigen Fläche (156) bei normalen Betrieb das zylindrische Teil (154) nicht bewegt.

3. Bremsanordnung nach Anspruch 1, bei der die Verriegelungsfläche an dem zylindrischen Teil (154) außerdem gekennzeichnet ist durch Zähne (186), die zu entsprechenden Zähnen (190) am Flansch (141) passen, um die Lage des zylindrischen Teils (154) bezüglich der Nabe (86) und die Lage der Kolben (32, 34) bezüglich der Ausgleichsöffnungen (40, 42) festzulegen.

4. Bremsanordnung nach Anspruch 1, bei der die Lagereinrichtung (152) außerdem dadurch gekennzeichnet ist, daß das zylindrische Teil (154) und das elastische Teil (148) von einem einstückigen Teil gebildet werden.

5. Bremsanordnung nach Anspruch 3, bei der die Verriegelungsfläche außerdem gekennzeichnet ist durch eine Rippe (188) an dem zylindrischen Teil (154), welche die Bewegung des zylindrischen Teils (154) in Richtung auf die Wandanordnung (82) begrenzt.

6. Bremsanordnung nach Anspruch 1, bei der das zylindrische Teil außerdem gekennzeichnet ist durch einen zweiten Halter (182) mit einem ersten Abschnitt, der an dem Flansche (141) befestigt ist, und einem zweiten Abschnitt, der sich in die Leistungskammer (97) hineinerstreckt, um der ringförmigen Fläche (156) Festigkeit zu verleihen.

7. Bremsanordnung nach Anspruch 1, bei der das zylindrische Teil (154) dadurch gekennzeichnet ist, daß es ein elastisches Teil ist, um für einen im wesentlichen geräuschfreien Eingriff zu sorgen, wenn die Habe (86) der Wandanordnung (82) an der ringförmigen Fläche (156) angreift.

8. Bremsanordnung nach Anspruch 3, bei der die Zähne (186) dadurch gekennzeichnet sind, daß sie eine Spitze mit einer schwachen Neigung auf der in Richtung der Kammer (97) zeigenden Seite und einer abrupten Neigung auf der von der Kammer (97) abgewandten Seite aufweist, wobei die schwache Neigung dem zylindrischen Teil (154) erlaubt, sich ohne Schaden an der Umfangsfläche in Richtung auf die Kammer (97) zu bewegen, während die abrupte Neigung einer Bewegung des zylindrischen Teils (154) aus der Kammer (97) heraus einen beträchtlichen Widerstand entgegensetzt.

9. Bremsanordnung nach Anspruch 1, bei der das zylindrische Teil (154) und das elastische Teil (148) einheitlich und einstückig um den Halter (158) herum gegossen sind.

**Revendications**

1. Ensemble de frein comprenant un appareil d'assistance (16) raccordé à un maître-cylindre (12) pour alimenter un système de freinage en fluide pressurisé, en réponse à un signal d'entrée d'actionnement, ledit maître-cylindre (12) comportant un carter dans lequel est ménagé un alésage (36) relié à un réservoir (38) à travers des orifices de compensation (40, 42) et audit système de freinage à travers des orifices d'alimentation (44, 46) ainsi que des moyens de piston (32, 34) logés dans ledit alésage (36) afin d'y établir des chambres (56), 58), ledit appareil d'assistance comprenant une coquille antérieure (14) raccordée audit maître-cylindre (12) et associée à une coquille postérieure (20) pour former une cavité, ladite cavité étant divisée en une chambre de commande (96) et une chambre motrice (97) par un agencement de paroi (82), ledit agencement de paroi (82) comportant un moyeu (86) pourvu d'une saillie annulaire (98) maintenue dans une ouverture (142) de ladite coquille postérieure (20) par des moyens de palier (152), ladite saillie annulaire (98) retenant une soupape (30) qui commande le développement d'une pression différentielle de part et d'autre dudit agencement de paroi (82) en réponse audit signal d'actionnement, ladite pression différentielle forçant ledit agencement de paroi (82) à se déplacer et à appliquer une force d'entrée auxdits pistons (32, 34), ladite force d'entrée déplaçant lesdits pistons (32, 34) afin d'interrompre les transmissions de fluide à travers ledits orifices de compensation (40, 42) et ainsi de comprimer le fluide dans lesdites chambres (56, 58) pour effectuer une application des freins, un organe élastique (148) présentant une première surface qui est fixée à une bride (141) et une surface flexible qui s'applique sur ladite saillie annulaire (98) afin de fermer hermétiquement ladite ouverture (142), un organe de retenue (158) attaché à ladite bride (141) pour maintenir ledit organe élastique (148) dans une position substantiellement immobile dans ladite bride (141), et un organe de support (150) maintenu par ledit organe de retenue (158) contre ledit organe élastique (148) et présentant une surface qui s'applique sur ladite saillie annulaire (98), ledit organe de support (150) et ladite bride (141) autorisant une excentricité limitée entre ladite ouverture (142) et la saillie annulaire (98) pour prévenir le grippage qui pourrait se produire lors du déplacement de la saillie annulaire (98) et ensuite établir une voie de fuite par rapport audit organe élastique (148), lesdits moyens de palier (152) étant caractérisés par une pièce cylindrique (154) située dans ladite ouverture (142) et présentant une surface annulaire (156) qui s'étend à l'intérieur de ladite chambre motrice (97), le moyeu (86) dudit agencement de paroi (82) prenant appui contre ladite surface annulaire (156) dans ladite position de repos, la position de ladite pièce cylindrique (154) étant réglable par rapport à ladite ouverture pour aligner lesdits pistons (32, 34) par rapport auxdits orifices de compensation (40, 42), ladite pièce cylindrique (154) portant à cet effet une surface de blocage qui attaque ladite bride (141) sur ladite coquille postérieure (20, 21) qui entoure ladite ouverture (142) ladite surface de blocage fixant la position de ladite surface annulaire (156) afin de maitenir ainsi ledit alignement desdits pistons.

2. Ensemble de frein suivant la revendication 1, dans lequel ladite surface de blocage sur ladite pièce cylindrique (154) est en outre caractérisée par un ajustement à joint serré avec ladite bride (141) pour établir une résistance par frottement suffisante pour assurer que l'engagement du moyeu (86) dudit agencement de paroi (82) avec ladite surface annulaire (156) ne déplacera pas ladite pièce cylindrique (154) en utilisation normale.

3. Ensemble de frein suivant la revendication 1, dans lequel ladite surface de blocage sur ladite pièce cylindrique (154) est en outre caractérisée par des arêtes (186) qui répondent à des arêtes (190) correspondantes sur ladite bride (141) pour fixer la position de ladite pièce cylindrique (154) par rapport audit moyeu (86) et la position desdits pistons (32, 34) par rapport auxdits orifices de compensation (40, 42).

4. Ensemble de frein suivant la revendication 1, dans lequel lesdits moyens de palier (152) sont en outre caractérisés en ce que ladite pièce cylindrique (154) et ledit organe élastique (148) forment un corps unitaire.

5. Ensemble de frein suivant la revendication 3, dans lequel ladite surface de blocage est en outre caractérisée par une nervure (188) sur ladite pièce cylindrique (154), qui limite le mouvement de ladite pièce cylindrique (154) en direction dudit agencement de paroi (82).

6. Ensemble de frein suivant la revendication 1, dans lequel ladite pièce cylindrique (154) est en outre caractérisée par un second organe de retenue (182) comprenant une première portion qui est attachée à ladite bride (141) et une seconde portion qui s'étend à l'intérieur de ladite chambre motrice (97) pour conférer une rigidité à ladite surface annulaire (156).

7. Ensemble de frein suivant la revendication 1, dans lequel ladite pièce cylindrique (154) est caractérisée en ce qu'elle est un organe élastique pour assurer un engagement substantiellement silencieux lorsque le moyeu (86) dudit agencement de paroi (82) attaque ladite surface annulaire (156).

8. Ensemble de frein suivant la revendication 3, dans lequel lesdites arêtes (186) sont caractérisées en ce qu'elles ont une pointe avec une pente progressive sur le côté tourné dans la direction de ladite chambre (97) et une pente abrupte sur le côté opposé à ladite chambre (97), ladite pente progressive permettant à ladite pièce cylindrique (154) d'être déplacée en direction de ladite chambre (97) sans dommage pour la surface périphérique tandis que ladite pente abrupte offre une résistance substantielle au mouvement de la pièce cylindrique (154) pour sortir de ladite chambre (97).

9. Ensemble de frein suivant la revendication 1, dans lequel ladite pièce cylindrique (154) et ledit organe élastique (148) sont moulés d'une pièce autour dudit organe de retenue (158).

FIG. I

FIG. 2

FIG. 3

0 143 270